# EUROPÄISCHE PATENTSCHRIFT

(11) **EP 2 091 770 B1**
(45) Veröffentlichungstag und Bekanntmachung des Hinweises auf die Patenterteilung: **20.06.2012**
(21) Anmeldenummer: 07846623.2
(22) Anmeldetag: 16.11.2007
(51) Int. Cl.: B60J 5/04

(54) **AUSTATTUNGSTEIL, INSBESONDERE FÜR EIN KRAFTFAHRZEUG, MIT EINEM ERSTEN TEILBEREICH UND EINEM EINSTÜCKIG MITTELS EINES VERBINDUNGUNGSBEREICHS ANGEBUNDENEN ZWEITEN TEILBEREICH**
FIXTURE, IN PARTICULAR FOR A MOTOR VEHICLE, WITH A FIRST PARTIAL REGION AND A SECOND PARTIAL REGION WHICH IS INTEGRALLY ATTACHED BY MEANS OF A CONNECTING REGION
ELEMENT D'EQUIPEMENT, NOTAMMENT POUR UN VEHICULE AUTOMOBILE, AVEC UNE PREMIERE REGION PARTIELLE ET UNE DEUXIEME REGION PARTIELLE RATTACHEE D'UN SEUL TENANT À LA PREMIERE AU MOYEN D'UNE REGION DE LIAISON

(30) Priorität: 16.11.2006 DE 102006054443; 10.04.2007 DE 102007017090
(43) Veröffentlichungstag der Anmeldung: 26.08.2009
(73) Patentinhaber: Johnson Controls GmbH, 51399 Burscheid (DE)
(72) Erfinder: SIMEONIDIS, Antonios, 42287 Wuppertal (DE); GERHARDT, Frank, 51143 Köln (DE); MANTKE, Jörg, 51381 Leverkusen (DE)
(74) Vertreter: Schwöbel, Thilo K.
(86) Internationale Anmeldenummer: PCT/EP2007/009914
(87) Internationale Veröffentlichungsnummer: WO 2008/058747

(56) Entgegenhaltungen:
- WO-A-95/25646
- DE-A1- 10 304 689
- DE-A1-102004 034 124
- US-A- 5 435 619

## Beschreibung

Die vorliegende Erfindung betrifft ein Ausstattungsteil, insbesondere für ein Kraftfahrzeug mit einem ersten Teilbereich und mit einem zweiten Teilbereich, wobei der erste Teilbereich mit dem zweiten Teilbereich einstückig mittels eines Verbindungsbereichs verbunden ist.

Solche Ausstattungsteile sind insbesondere für die Fahrzeuginnenverkleidung allgemein bekannt. Beispielsweise ist aus der deutschen Offenlegungsschrift DE 10 2004 034 124 A1 ein Verstärkungsteil für einen Aufprallschutz eines Seitenbereichs eines Kraftfahrzeuges bekannt, wobei das Verstärkungsteil ein Fachwerk aus miteinander verbundenen Stegen aufweist. Die Stege sind hierbei aus Kunststoff gefertigt und wabenförmig gestaltet. Nachteilig bei dem Stand der Technik ist, dass bei der Fertigung der wabenförmigen Struktur zusammen mit dem Ausstattungsteil nicht verhindert werden kann, dass die wabenförmige Struktur auf der Vorderseite (d. h. der wabenförmigen Struktur abgewandten Seite des Ausstattungsteils) zumindest andeutungsweise sichtbar ist.

DE 10304689 A1 offenbart den Oberbegriff des Anspruchs 1. Es ist daher eine Aufgabe der vorlegenden Erfindung, ein Ausstattungsteil, insbesondere für ein Kraftfahrzeug, mit einem ersten Teilbereich und mit einen einstückig verbundenen zweiten Teilbereich zu schaffen, wobei das Ausstattungsteil eine Vielzahl von Funktionen, insbesondere Dämpfungsfunktionen sowie optisch ästhetische Funktionen erfüllen kann und darüber hinaus gewichtssparend, kostensparend und leicht und einfach herstellbar ist.

Die Aufgabe wird gelöst durch ein Ausstattungsteil, insbesondere für ein Kraftfahrzeug, mit einem ersten Teilbereich und mit einem zweiten Teilbereich, wobei der erste Teilbereich mit dem zweiten Teilbereich einstückig mittels eines Verbindungsbereichs verbunden ist und wobei mittels des Verbindungsbereichs der erste Teilbereich relativ zum zweiten Teilbereich vormontierbar vorgesehen ist. Hierdurch ist es erfindungsgemäß besonders kostengünstig möglich, ein einstückiges Bauteil zur Erfüllung einer Vielzahl von unterschiedlichen Funktionen bereitzustellen, wobei zu Realisierung dieser unterschiedlichen Funktionen insbesondere eine Vormontierung - etwa ein Umklappen des zweiten Teilbereichs - vorgesehen ist, um einen Einbau des Ausstattungsteils in ein Kraftfahrzeug bzw. in eine Kraftfahrzeugkomponente vorzunehmen.

Erfindungsgemäß ist es bevorzugt, dass mittels des Verbindungsbereichs der erste Teilbereich relativ zum zweiten Teilbereich bewegbar, insbesondere klappbar, vorgesehen ist. Hierdurch ist es in besonders einfacher und intuitiver Weise möglich, eine Vormontierbarkeit des ersten Teilbereichs relativ zu dem zweiten Teilbereich zu bewirken, wobei eine falsche Positionierung bzw. Vormontierung der Teilbereiche zueinander nicht möglich ist bzw. im größtmöglichen Maße ausgeschlossen ist.

Weiterhin ist es erfindungsgemäß bevorzugt, dass der erste Teilbereich und/oder der zweite Teilbereich ein Befestigungselement zur Vormontage des ersten Teilbereichs relativ zum zweiten Teilbereich aufweist. Hierdurch kann die Vormontage in äußerst einfacher und sicherer Weise vorgenommen werden und der komplette Funktionsumfang des Ausstattungsteils realisiert werden.

Weiterhin ist es erfindungsgemäß bevorzugt, dass in vormontiertem Zustand der erste Teilbereich irreversibel relativ zum zweiten Teilbereich angeordnet ist. Hierdurch können Störungen, die durch ein ansonsten mögliches erneutes Lösen der Anordnung des ersten Teilbereichs relativ zu dem zweiten Teilbereich nach einer Vormontage hervorgerufen werden, weitestgehend vermieden werden. Ferner ist es hierdurch möglich, dass die Wahrscheinlichkeit von Fehlern bei der Montage des Ausstattungsteils weiter reduziert wird, etwa weil die Möglichkeiten einer falschen Verwendung bzw. einer falschen Anordnung der Teilbereiche des Ausstattungsteils (misuse) erheblich reduziert wird. Alternativ zu der dargestellten irreversiblen Verbindung bzw. Anordnung des ersten Teilbereichs relativ zu dem zweiten Teilbereich kann es erfindungsgemäß selbstverständlich auch bevorzugt vorgesehen sein, dass die Teilbereiche relativ zueinander reversibel angeordnet sind. Dies könnte beispielsweise Vorteile im Fall von Reparaturarbeiten oder dergleichen haben, die beispielsweise einen Austausch des Ausstattungsteils oder einen Ausbau des Ausstattungsteils erforderlich machen.

Ferner ist es erfindungsgemäß bevorzugt, dass der erste Teilbereich vorrangig eine Verkleidungsfunktionalität aufweist. Hierdurch muss das Ausstattungsteil eine besondere optische und/oder ästhetische Funktion erfüllen, insbesondere ist zumindest eine Seite bzw. ein Teilbereich einer Seite des Ausstattungsteils als eine sogenannte Sichtseite vorgesehen, d. h. eine solche Seite, die von einem Benutzer, insbesondere einem Fahrzeugbenutzer, gesehen werden kann, sofern dieser sich in einer normalen Benutzungsposition in oder außerhalb des Fahrzeugs befindet.

Erfindungsgemäß ist weiterhin bevorzugt, dass der erste Teilbereich eine Sichtseite aufweist, insbesondere auf der dem zweiten Teilbereich in vormontierten Zustand abgewandten Seite. Hierdurch ist es erfindungsgemäß in besonderem Maße möglich, sowohl die beiden Teilbereiche einstückig miteinander verbunden herzustellen und zum anderen eine optisch ansprechende Sichtseite zu realisieren.

Weiterhin ist es erfindungsgemäß in besonderer Weise bevorzugt, dass der zweite Teilbereich vorrangig eine Absorptionsfunktionalität und/oder eine Dämpfungsfunktionalität aufweist. Hierdurch können, außer den optisch-ästhetischen Funktionalitäten des Ausstattungsteils, ferner in integrierter Weise und damit sehr kostengünstig, Sicherheitsfunktionalitäten in das Ausstattungsteil integriert werden, so dass sich insgesamt der Sicherheitsstandard des Kraftfahrzeugs in kostengünstiger Weise einfach erhöhen lässt.

Besonders bevorzugt ist es, dass der zweite Teilbereich eine Wabenstruktur aufweist bzw. dass der Verbindungsbereich als ein Filmscharnier vorgesehen ist. Hierdurch kann die Absorptionsfunktionalität bzw. die Dämpfungsfunktionalität und die leichte Vormontierbarkeit des zweiten Teilbereichs in besonders einfacher Weise realisiert werden.

Ein weiterer Gegenstand der vorliegenden Erfindung ist ein Verfahren zur Herstellung eines erfindungsgemäßen Ausstattungsteils, wobei der erste Teilbereich und der zweite Teilbereich im Wesentlichen gleichzeitig geformt werden. Hierdurch können in besonderer Weise Kosten bei der Herstellung des Ausstattungsteils eingespart werden und dennoch ein Ausstattungsteil mit einer Vielzahl von Funktionalitäten bereitgestellt werden. Ferner ist durch die Realisierung dieser Vielzahl von Funktionalitäten mittels eines einzigen Ausstattungsteils (einstückige Herstellung) gewährleistet, dass kein unnötiger logistischer Aufwand, etwa durch eine Mehrzahl von Teilenummern oder dergleichen, betrieben werden muss, sondern die Anzahl der zur Realisierung der Funktionalität erforderlichen Bauteile und damit die Kosten reduziert werden können.

Ausführungsbeispiele der Erfindung sind in den Zeichnungen dargestellt und in der nachfolgenden Beschreibung näher erläutert.
Figur 1 zeigt ein erfindungsgemäßes Ausstattungsteil mit einem ersten Teilbereich und einem zweiten Teilbereich in einer ersten Position zueinander.
Figur 2 zeigt in verschiedenen Teildarstellungen verschiedene relative Positionen der beiden Teilbereiche zueinander.
Figur 3 zeigt das Ausstattungsteil in einem vormontierten Zustand bzw. in einer vormontierten Einstellung der Teilbereiche zueinander.

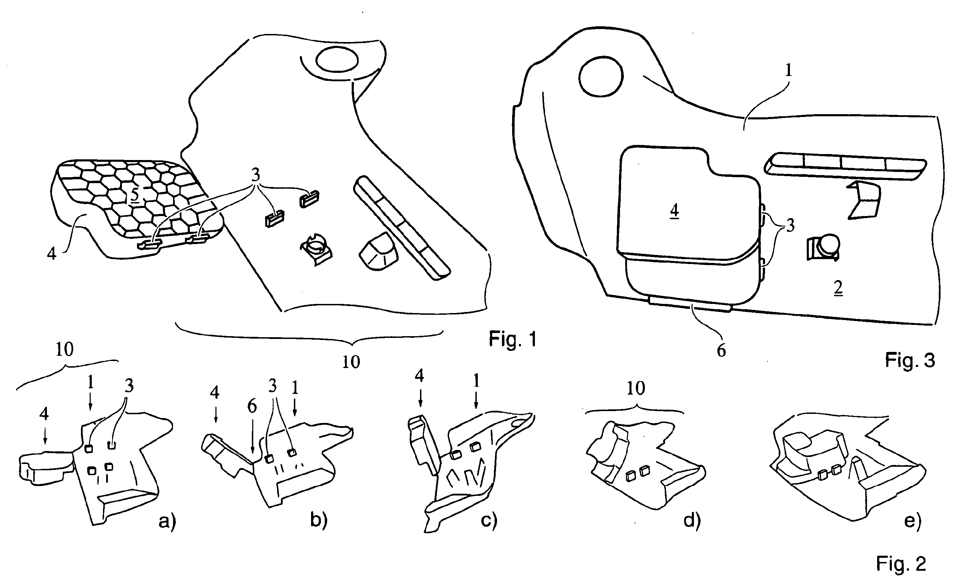

In den Figuren 1, 2 und 3 ist jeweils ein Ausstattungsteil 10 dargestellt, welches einen ersten Teilbereich 1 und einen zweiten Teilbereich 4 aufweist. Die Teilbereiche 1, 4 sind über einen Verbindungsbereich 6 einstückig miteinander verbunden und die Teilbereiche 1, 4 sind mittels des Verbindungsbereichs 6 relativ zueinander vormontierbar vorgesehen, insbesondere klappbar vorgesehen. Hierdurch ist es erfindungsgemäß in besonders einfacher Weise und vergleichsweise kostengünstig möglich, ein Ausstattungsteil 10, insbesondere für den Innenraum eines Kraftfahrzeugs, zu schaffen, welches eine von einem Benutzer des Kraftfahrzeugs in einer normalen Sitz- oder Beobachtungs- bzw. Ansichtsposition befindlichen Benutzer sichtbare Vorderseite und eine nach dem Einbau des Ausstattungsteils 10 der Sicht des Sitz- bzw. Kraftfahrzeugbenutzers entzogene Rückseite 2 aufweist, wobei im Bereich der Rückseite 2 ein Verstärkungselement 4 als zweiter Teilbereich 4 des Ausstattungsteils 10 vorzusehen ist. Das Verstärkungs- oder Dämpfungselement, beispielsweise zur Absorption von Stößen oder auch von akustischen Schwingungen oder dergleichen, kann beispielsweise das Ausstattungsteil 10 im Falle eines Unfalls oder auch im Falle von akustischen Störeinflüssen gegen eine dahinterliegende, d. h. der Rückseite 2 zugewandte, Karosseriewandung oder ein anderes Einbauteil bzw. andere Fahrzeugstrukturen abstützen bzw. akustisch isolieren. Hierbei weist das Ausstattungsteil 10 auf seiner der Rückseite 2 gegenüberliegenden Vorder- bzw. Sichtseite eine Struktur auf bzw. ist entsprechend eingerichtet, dass den Komfortansprüchen hinsichtlich der Haptik und/oder den Komfort und/oder ästhetischen Ansprüchen hinsichtlich der Optik bzw. der Ästhetik eines Sitzbenutzers bzw. eines Fahrzeugbenutzers in besonderer Weise Rechnung getragen werden kann. Das (durch den Fahrzeugbenutzer nicht sichtbare) Verstärkungselement 4 muss diesen optisch-ästhetischen Anforderungen nicht genügen, sondern muss andere Anforderungen hinsichtlich der Stabilität, der Dämpfung oder dergleichen erfüllen. Erfindungsgemäß soll zur Bauteilreduzierung und zur Vereinfachung der logistischen Erfordernisse und des Montageaufwandes und daher insgesamt zu kostengünstigen Herstellung eines Kraftfahrzeuges bzw. eines Kraftfahrzeugsitzes das Ausstattungsteil 10 als integriertes bzw. einstückiges Ausstattungsteil 10 vorgesehen sein, welches das Verstärkungselement 4 in dem zweiten Teilbereich 4 einstückig umfasst. Hierbei kann auf bekannte Verfahren zur einstückigen Herstellung von beispielsweise Kunststoffteilen durch Spritzgießen-, Druckgießen- oder dergleichen zurückgegriffen werden. Eine konträr zur vorliegenden Erfindung vorgesehene direkte Anbringung bzw. Positionierung des zweiten Teilbereichs 4 an der im Einbauzustand vorgesehenen Stelle des zweiten Teilbereichs 4 kann hierbei dadurch erheblich verteuert oder verkompliziert werden, dass beispielsweise die optische Qualität der Vorderseite des ersten Teilbereichs 1, insbesondere in dem Bereich des Verstärkungselements 4 bzw. des zweiten Teilbereichs 4 durch Einfallstellen, Schlieren oder sonstigen Markierungen beeinträchtigt wird.

Gemäß der vorliegenden Erfindung wird ein kostengünstiges und einfach herzustellendes Ausstattungsteil 10 mit dem ersten Teilbereich 1 und dem zweiten Teilbereich 4 dadurch realisiert, dass mittels des Verbindungsbereichs 6 eine Anbindung der Teilbereiche 1, 4 aneinander gewährleistet wird, jedoch aufgrund der im Herstellungsmoment vergleichsweise beabstandeten Positionierung des ersten Teilbereichs 1 und des zweiten Teilbereichs 4 die Prozessparameter zur Herstellung der Teilbereiche 1, 4 derart gewählt werden können, dass diese jeweils optimal auf die jeweils zu erfüllenden Funktionalitäten bzw. Funktionen der einzelnen Teilbereiche 1, 4 abgestimmt werden können. Insbesondere ist es hierdurch auch möglich, dass die Formgebung des ersten und/oder zweiten Teilbereichs 1, 4 mit einer größeren Flexibilität möglich ist, da beispielsweise Hinterschnitte am ersten Teilbereich 1 in räumlicher Nähe zum später zu positionierenden zweiten Teilbereich 4 möglich sind, die bei einer Herstellung des zweiten Teilbereichs 4 an Ort und Stelle der späteren Position des zweiten Teilbereichs 4 relativ zum ersten Teilbereich 1 nicht möglich wären.

Bevorzugt ist der zweite Teilbereich 4 aufgrund der Flexibilität des Verbindungsbereichs 6 klappbar am ersten Teilbereich 1 befestigt, so dass durch Umklappen des zweiten Teilbereichs 4 eine Vormontierung des zweiten Teilbereichs 4 am ersten Teilbereich 1 möglich ist. Dies ist in Figur 2 anhand mehrerer Teilbilder dargestellt. In Figur 2a ist beispielsweise die Positionierung der beiden Teilbereiche 1, 4 relativ zueinander derart dargestellt, wie sie beim Formgebungsprozess bzw. beim Herstellungsprozess des Ausstattungsteils 10 vorliegt. In den Figuren 2b, 2c und 2d ist sukzessive ein Umklappen des zweiten Teilbereichs 4 um den im Beispiel als Filmscharnier ausgebildeten Verbindungsbereich 6 dargestellt. In den Figuren 2a bis 2d sind in besonders großer Deutlichkeit eine Mehrzahl von Befestigungselementen 3 sichtbar, die entweder am ersten Teilbereich 1 oder am zweiten Teilbereich 4 oder an beiden Teilbereichen 1, 4 derart angeordnet sind, dass in der in der Figur 2e dargestellten Verrastungsposition bzw. Vormontageposition des zweiten Teilbereichs 4 relativ zum ersten Teilbereich 1 eine Befestigung, insbesondere eine Verrastung, des zweiten Teilbereichs 4 mit dem ersten Teilbereich 1 stattfindet. Dieser vormontierte Zustand des zweiten Teilbereichs 4 relativ zum ersten Teilbereich 1 ist auch in Figur 3 in einer stärkeren Vergrößerung nochmals dargestellt. Der zweite Teilbereich 4 bzw. das Verstärkungselement 4 kann beispielweise eine in der Figur 1 dargestellte Wabenstruktur 5 aufweisen, mittels der beispielsweise bei einem Unfall durch Deformation Energie dissipiert werden kann. Ferner kann das Verstärkungselement 4 bzw. der zweite Teilbereich 4 um die Wabenstruktur 5 herum eine wannenförmige Struktur aufweisen. Es ist jedoch erfindungsgemäß auch möglich, dass die Wabenstruktur 5 nicht mit einer wannenförmigen Struktur kombiniert ist. Ferner könnte es erfindungsgemäß auch vorgesehen sein, dass in dem Teil des Kunststoffformgebungswerkzeugs (nicht dargestellt), welcher dem späteren zweiten Teilbereich 4 entspricht, ein Einleger oder dergleichen, beispielsweise aus dämpfendem oder eine sonstige Funktion aufweisendem Material derart aufweist, dass entweder auf der in vormontiertem Zustand des zweiten Teilbereichs 4 dem ersten Teilbereich 1 zugewandten Seite oder auf der gegenüberliegenden Seite (Rückseite des zweiten Teilbereichs 4) eine solche Einlage bzw. eine solche Verstärkungs- und/oder Dämpfungs- und/oder Absorptionsschicht bzw. ein entsprechendes Material angeordnet ist. Insbesondere bei einer während des Herstellungs- bzw. Formgebungsprozesses des Ausstattungsteils 10 auf der Rückseite 2 des ersten Teilbereichs 1 angeformten Wabenstruktur 5 würde sich diese Wabenstruktur 5 - insbesondere bei einer vergleichsweise geringen Dicke des blendenartig ausgeführten ersten Teilbereichs 1 - auf der Vorderseite bzw. Sichtseite des ersten Teilbereichs 1 abzeichnen.

Erfindungsgemäß ist beispielhaft vorgesehen, dass das Verstärkungselement 4 bzw. der zweite Teilbereich 4 des Ausstattungsteils 10 durch einen als Filmscharnier ausgebildeten Verbindungsbereich 6 mit dem ersten Teilbereich 1 bzw. der Blende 1 verbunden ist. Dies kann bei der Fertigung durch Spritzgießen beispielsweise dadurch geschehen, dass im Spritzgießwerkzeug (nicht dargestellt) die Kavität für das Verstärkungselement 4 in einem der Kavität für die Blende 1 bzw. den ersten Teilbereich 1 benachbart und in einer gegenüber der späteren Einbaustellung um 180° gedrehten Stellung angeordnet ist und beide Kavitäten durch eine dünne Ausnehmung für das Filmscharnier bzw. für den Verbindungsbereich 6 verbunden sind. Nach der Entformung des solchermaßen hergestellten Ausstattungsteils 10 kann dann das Verstärkungsteil 4 bzw. der zweite Teilbereich 4 (wie im Bewegungsablauf gemäß der Figur 2a bis Figur 2e gezeigt) unter Biegung des Filmscharniers des Verbindungsbereichs 6 auf die Rückseite 2 des ersten Teilbereichs 1 geklappt und dort mittels der insbesondere als Rasthaken ausgebildeten Befestigungselemente 3 verrastet werden. In diesem Zustand ist der zweite Teilbereich 4 vormontiert und das solchermaßen vormontierte Ausstattungsteil 10 kann nachfolgend am Fahrzeugsitz bzw. an einer sonstigen Stelle des Fahrzeugs verbaut werden.

Durch die erfindungsgemäße Struktur des Ausstattungsteils 10 kann in besonders einfacher und flexibler Weise auf verschiedene Funktionsanforderungen verschiedener Bereiche des Ausstattungsteils 10 Rücksicht genommen werden und dennoch eine einfache und kostengünstige Herstellbarkeit des Ausstattungsteils 10 gewährleistet werden, wobei ferner die Fehlermöglichkeiten bei der Vormontage des zweiten Teilbereichs 4 relativ zum ersten Teilbereich 1 beispielsweise dadurch vermieden werden können, dass lediglich eine einzige Klapprichtung bzw. Klappbewegung möglich ist.

### Bezugszeichenliste

- 1: erster Teilbereich / Blende
- 2: Rückseite
- 3: Befestigungselement / Rasthaken
- 4: zweiter Teilbereich / Verstärkungselement
- 5: Wabenstruktur
- 6: Verbindungsbereich / Filmscharnier
- 10: Ausstattungsteil

## Patentansprüche

1. Ausstattungsteil (10), insbesondere für ein Kraftfahrzeug, mit einem ersten Teilbereich (1) und mit einem zweiten Teilbereich (4), wobei der erste Teilbereich (1) mit dem zweiten Teilbereich (4) einstückig mittels eines Verbindungsbereichs (6) verbunden ist, wobei mittels des Verbindungsbereichs (6) der erste Teilbereich (1) relativ zum zweiten Teilbereich (4) vormontierbar vorgesehen ist, **dadurch gekennzeichnet, dass** der erste Teilbereich (1) eine Verkleidungsfunktionalität aufweist und der zweite Teilbereich (4) eine Absorptionsfunktionalität aufweist, wobei der erste Teilbereich (1) eine Sichtseite aufweist, wobei der zweite Teilbereich (4) eine Wabenstruktur (5) aufweist.

2. Ausstattungsteil (10) nach Anspruch 1, **dadurch gekennzeichnet, dass** mittels des Verbindungsbereichs (6) der erste Teilbereich (1) relativ zum zweiten Teilbereich (4) bewegbar, insbesondere klappbar, vorgesehen ist.

3. Ausstattungsteil (10) nach einem der vorhergehenden Ansprüche, **dadurch gekennzeichnet, dass** der erste Teilbereich (1) und/oder der zweite Teilbereich (4) ein Befestigungselement (3) zur Vormontage des ersten Teilbereichs (1) relativ zum zweiten Teilbereich (4) aufweist.

4. Ausstattungsteil (10) nach einem der vorhergehenden Ansprüche, **dadurch gekennzeichnet, dass** in vormontiertem Zustand der erste Teilbereich (1) irreversibel relativ zum zweiten Teilbereich (4) angeordnet ist.

5. Ausstattungsteil (10) nach einem der vorhergehenden Ansprüche, **dadurch gekennzeichnet, dass** der Verbindungsbereich (6) als ein Filmscharnier vorgesehen ist.

## Claims

1. Fixture (10), in particular for a motor vehicle, with a first partial region (1) and with a second partial region (4), the first partial region (1) being integrally connected to the second partial region (4) by means of a connecting region (6), wherein the first partial region (1) is provided such that it may be pre-assembled relative to the second partial region (4) by means of the connecting region (6), **characterized in that** the first partial region (1) has a cladding function and the second partial region (4) has an absorption function, wherein the first partial region (1) has a visible side, wherein the second partial region (4) has a honeycomb structure (5).

2. Fixture (10) according to Claim 1, **characterized in that** by means of the connecting region (6) the first partial region (1) is provided to be movable, in particular foldable, relative to the second partial region (4).

3. Fixture (10) according to one of the preceding claims, **characterized in that** the first partial region (1) and/or the second partial region (4) comprises a fastening element (3) for pre-assembling the first partial region (1) relative to the second partial region (4).

4. Fixture (10) according to one of the preceding claims, **characterized in that** in the pre-assembled state the first partial region (1) is arranged irreversibly relative to the second partial region (4).

5. Fixture (10) according to one of the preceding claims, **characterized in that** the connecting region (6) is provided as a film hinge.

## Revendications

1. Elément d'équipement (10), en particulier pour un véhicule automobile, comprenant une première région partielle (1) et une deuxième région partielle (4), la première région partielle (1) étant connectée d'une seule pièce à la deuxième région partielle (4) au moyen d'une région de liaison (6), la première région partielle (1) étant prévue de manière à pouvoir être prémontée au moyen de la région de liaison (6) par rapport à la deuxième région partielle (4), **caractérisé en ce que** la première région partielle (1) présente une fonction d'habillage et la deuxième région partielle (4) présente une fonction d'absorption, la première région partielle (1) présentant un côté visible et la deuxième région partielle (4) présentant une structure en nid d'abeilles (5).

2. Elément d'équipement (10) selon la revendication 1, **caractérisé en ce que** la première région partielle (1) est prévue de manière à pouvoir être déplacée, notamment rabattue, par rapport à la deuxième région partielle (4) au moyen de la région de liaison (6).

3. Elément d'équipement (10) selon l'une quelconque des revendications précédentes, **caractérisé en ce que** la première région partielle (1) et/ou la deuxième région partielle (4) présentent un élément de fixation (3) pour le prémontage de la première région partielle (1) par rapport à la deuxième région partielle (4).

4. Elément d'équipement (10) selon l'une quelconque des revendications précédentes, **caractérisé en ce que** dans l'état prémonté, la première région partielle (1) est disposée de manière irréversible par rapport à la deuxième région partielle (4).

5. Elément d'équipement (10) selon l'une quelconque des revendications précédentes, **caractérisé en ce que** la région de liaison (6) est prévue sous la forme d'une charnière à film.
